# EUROPÄISCHE PATENTANMELDUNG

(11) **EP 1 512 832 A1**
(43) Veröffentlichungstag der Anmeldung: **09.03.2005**
(21) Anmeldenummer: 03103266.7
(22) Anmeldetag: 02.09.2003
(51) Int. Cl.: F01D 5/02, F01D 5/06, F01D 1/10, B23D 31/00, B23P 15/00

(54) **Verfahren zum Herstellen eines Turbinenrotors mit Regelrad**

(71) Anmelder: Alstom Technology Ltd, 5400 Baden (CH)
(72) Erfinder: FREUSCHLE, Dieter, 79761, Waldshut-Tiengen (DE); BARTSCH, Herbert, 79804, Dogern (DE)

(57) **Zusammenfassung**

Die Erfindung betrifft ein Verfahren zum Herstellen eines mit einem Regelrad (4) ausgestatteten Rotors (1) einer Turbine, insbesondere einer Dampfturbine, mit folgenden Schritten:
A: Herstellen eines ringförmig geschlossenen Schaufelkranzes (5),
B: Trennen des Schaufelkranzes (5) in mehrere Teile (11,12),
C: Zusammensetzen der Teile (11,12) um den Rotor (1), derart, daß der zusammengesetzte Schaufelkranz (5) den Rotor (1) umschließt,
D: Anschweißen des zusammengesetzten Schaufelkranzes (5) am Rotor (1) an einem für das Regelrad (4) bestimmten Axialabschnitt (10).

## Beschreibung

### Technisches Gebiet

Die Erfindung betrifft ein Verfahren zum Herstellen eines mit einem Regelrad ausgestatteten Rotors einer Turbine, insbesondere Dampfturbine.

### Stand der Technik

Als "Regelrad" wird bei einer düsengeregelten Dampfturbine üblicherweise das in Dampfströmungsrichtung erste Laufrad bezeichnet. Dieses Regelrad ist durch die herrschenden hohen Temperaturen und durch die Dampfbeaufschlagung im Betrieb der Dampfturbine sehr hoch beansprucht. Um ein Regelrad so an der Turbine bzw. an einem Rotor der Turbine anzubringen, dass es diesen hohen Beanspruchungen standhält, wird das Regelrad üblicherweise in Form eines ringförmig geschlossenen Schaufelkranzes hergestellt, der komplett an der dafür vorgesehenen Stelle am Rotor angeschweißt wird. Diese herkömmliche Vorgehensweise zur Herstellung eines mit einem Regelrad ausgestatteten Rotors ist jedoch nur dann möglich, wenn der Innendurchmesser des Schaufelkranzes größer ist als der Außendurchmesser des Rotors stromauf oder stromab der für das Regelrad bestimmten Stelle. Problematisch sind hierbei vor allem die Querschnitte im Kolbenbereich, im Kupplungsbereich und im Beschaufelungsbereich. Für den Fall, daß der Kolbendurchmesser größer sein soll als der Innendurchmesser des Schaufelkranzes, ist es bei einer herkömmlichen Vorgehensweise üblich, den Kolben zunächst mit einem kleineren Außendurchmesser auszustatten, so daß der geschlossene Ring des Schaufelkranzes über den Kolbenbereich geschoben werden kann, um stromab des Kolbens den Schaufelkranz am Rotor anzuschweißen, um so das Regelrad auszubilden. Anschließend muß der Kolbendurchmesser durch Auftragsschweißen auf das gewünschte Maß vergrößert werden. Diese Vorgehensweise ist sehr aufwendig und nur bei relativ geringen Durchmesserunterschieden sinnvoll. Diese Probleme können bei der Herstellung im Rahmen einer Erstmontage auftreten, insbesondere dann, wenn es sich beim Rotor um einen Monoblockrotor handelt. Die geschilderte Problematik kann aber auch bei einer Herstellung im Rahmen einer nachträglichen Montage auftreten, z.B. beim Austausch oder Ersatz eines Regelrades.

### Darstellung der Erfindung

Hier will die Erfindung Abhilfe schaffen. Die vorliegende Erfindung beschäftigt sich mit dem Problem, ein Verfahren der eingangs genannten Art anzugeben, das die Anbringung eines geschlossenen Regelrades am Rotor einer Turbine auch dann ermöglicht, wenn der Rotor stromauf und stromab des Regelrades einen Außendurchmesser besitzt, der größer ist als der Innendurchmesser des Schaufelkranzes, der das Regelrad bildet.

Erfindungsgemäß wird dieses Problem durch ein Verfahren mit den Merkmalen des Anspruchs 1 gelöst.

Die Erfindung beruht auf dem allgemeinen Gedanken, zunächst einen ringförmig geschlossenen Schaufelkranz herzustellen, diesen in mehrere, also mindestens zwei, Teile zu trennen und am Rotor wieder zusammenzubauen. Durch diese Vorgehensweise sind die stromauf und stromab des Regelrads auftretenden Rotordurchmesser im wesentlichen ohne Einfluß auf die Montierbarkeit des Schaufelkranzes. Die hohe Beanspruchbarkeit des separat hergestellten, geschlossenen Schaufelkranzes bleibt dabei erhalten, da die einzelnen Teile des Schaufelkranzes bei der Montage am Rotor wieder zum geschlossenen Schaufelkranz zusammengefügt werden können. Das erfindungsgemäße Verfahren ist sowohl bei einer erstmaligen Neu-Herstellung als auch bei einer nachträglichen Wieder-Herstellung eines mit einem Regelrad ausgestatteten Rotors einer Turbine durchführbar.

Das Zusammensetzen der Teile des Schaufelkranzes um den Rotor kann bei einer bevorzugten Ausführungsform dadurch vereinfacht werden, daß dies in einem Axialabschnitt des Rotors durchgeführt wird, dessen Außendurchmesser kleiner ist als der Innendurchmesser des Schaufelkranzes. Insbesondere ist es dadurch relativ leicht möglich, aus den einzelnen Teilen den geschlossenen Schaufelkranz zusammenzufügen bzw. wiederherzustellen, bevor er am Rotor an der für das Regelrad bestimmten Stelle positioniert wird.

Dementsprechend können bei einer vorteilhaften Weiterbildung die zusammengesetzten Teile an ihren Trennstellen miteinander verschweißt werden, wobei erst danach der zusammengeschweißte Schaufelkranz am Rotor angeschweißt wird. Der hochfeste und hochbelastbare geschlossene Schaufelkranz wird somit komplett wiederhergestellt, bevor er an der dafür vorgesehenen Position am Rotor angeschweißt wird. Durch diese Vorgehensweise kann die hohe Standfestigkeit des geschlossenen Schaufelkranzes mit erhöhter Sicherheit gewährleistet werden.

Bevorzugt wird eine Weiterbildung des Verfahrens, bei dem die Teile für das Zusammensetzen in einen Montagehilfsring eingesetzt werden, dessen Innendurchmesser dem Außendurchmesser des Schaufelkranzes entspricht. Durch diese Maßnahme wird die Positionierung der einzelnen Teile relativ zueinander vereinfacht.

Bei einer Weiterbildung kann das Einsetzen und Zusammensetzen der Teile im Montagehilfsring in einem Axialabschnitt des Rotors erfolgen, dessen Außendurchmesser kleiner ist als der Innendurchmesser des Schaufelkranzes, wobei die zusammengesetzten Teile an den Innenseiten ihrer Trennstellen miteinander verschweißt werden, bevor der zusammengeschweißte Schaufelkranz am Rotor angeschweißt wird. Bei dieser Vorgehensweise ermöglicht der Montagehilfsring eine Positionierung und erleichtert dadurch das Verbinden der einzelnen Teile zur Wiederherstellung des geschlossenen Schaufelkranzes.

Entsprechend einer Weiterbildung kann nach dem Verschweißen der Teile an den Innenseiten der Trennstellen und vor dem Anschweißen des Schaufelkranzes am Rotor der Montagehilfsring entfernt werden, um die Teile auch an den Außenseiten ihrer Trennstellen miteinander verschweißen zu können. Durch diese Maßnahme kann die hohe Festigkeit des geschlossenen Schaufelkranzes gewährleistet werden noch bevor der Schaufelkranz am Rotor angeschweißt ist.

Das Anschweißen des zusammengesetzten und gegebenenfalls wieder hergestellten Schaufelkranzes am Rotor kann dadurch verbessert werden, daß der zusammengesetzte Schaufelkranz für das Anschweißen am Rotor mit einem den Schaufelkranz koaxial umfassenden Montagehilfsring positioniert wird, dessen Innendurchmesser dem Außendurchmesser des Schaufelkranzes entspricht. Diese Maßnahme ermöglicht einerseits eine exakte Positionierung des Schaufelkranzes und verhindert andererseits Verformungen des Schaufelkranzes aufgrund des Schweißvorgangs.

Weitere wichtige Merkmale und Vorteile des erfindungsgemäßen Verfahrens ergeben sich aus den Unteransprüchen, aus den Zeichnungen und aus der zugehörigen Figurenbeschreibung anhand der Zeichnungen.

### Kurze Beschreibung der Zeichnungen

Ein bevorzugtes Ausführungsbeispiel der Erfindung ist in den Zeichnungen dargestellt und wird in der nachfolgenden Beschreibung näher erläutert. Es zeigen, jeweils schematisch,
- Fig. 1: einen Längsschnitt durch einen mit einem Regelrad ausgestatteten Rotor und
- Fig. 2: einen Querschnitt durch den Rotor entsprechend den Schnittlinien II in Fig. 1 während der Durchführung des erfindungsgemäßen Verfahrens.

### Wege zur Ausführung der Erfindung

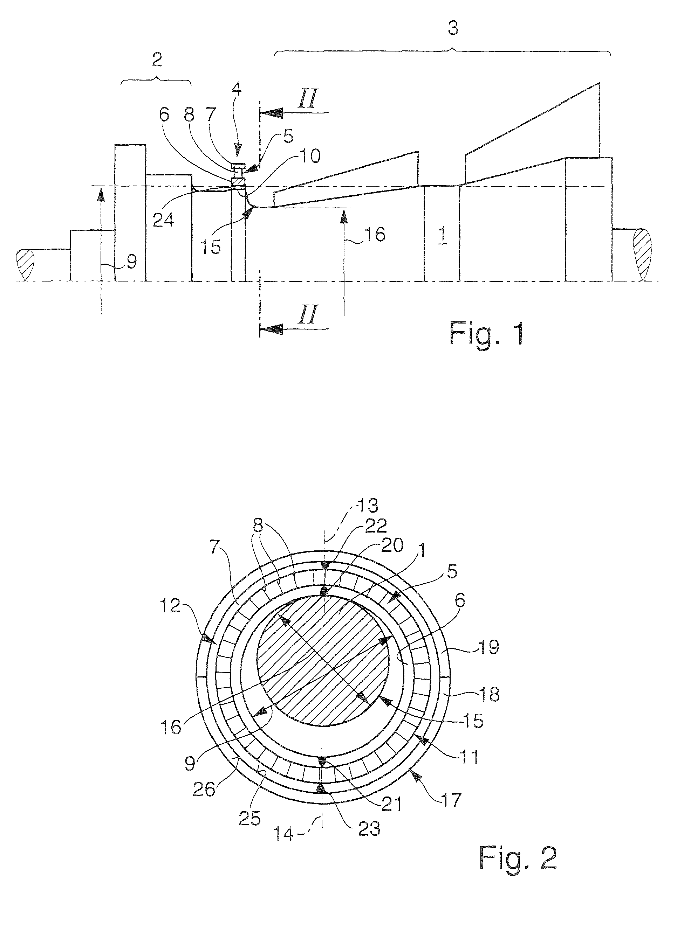

Entsprechend Fig. 1 besitzt ein Rotor 1 einer im übrigen nicht dargestellten Turbine, insbesondere einer Dampfturbine, einen axialen Kolbenbereich 2, der hier durch eine geschweifte Klammer gekennzeichnet ist, sowie einen axialen Schaufelbereich 3, der hier ebenfalls durch eine geschweifte Klammer gekennzeichnet ist. Axial zwischen dem Kolbenbereich 2 und dem Schaufelbereich 3 ist ein Regelrad 4 angeordnet, das die erste Laufschaufel der Turbine bildet. Die Turbine ist vorzugsweise als düsengeregelte Dampfturbine ausgebildet.

Um ein Regelrad 4 mit besonders hoher Festigkeit und Beanspruchbarkeit zu erhalten, wird dieses aus einem ringförmig geschlossenen Schaufelkranz 5 hergestellt, der einen ringförmig geschlossenen Fuß 6, ein ringförmig geschlossenes Deckband 7 und sich radial zwischen Fuß 6 und Deckband 7 erstreckende Schaufeln 8 umfaßt. Sowohl der stromauf vorangehende Kolbenbereich 2 als auch der stromab nachfolgende Schaufelbereich 3 weisen Außendurchmesser auf, die größer sind als ein Innendurchmesser des Schaufelkranzes 5. Aufgrund dieser konstruktiv vorgegebenen Verhältnisse kann der ringförmig geschlossene Schaufelkranz 5 in axialer Richtung weder über den Kolbenbereich 2 noch über den Schaufelbereich 3 auf einen für das Regelrad 4 bestimmten Axialabschnitt oder Sitz 10 geschoben werden.

Um eine Turbine bzw. deren Rotor 1 mit einem solchen geschlossenen Regelrad 4 auszustatten, wird erfindungsgemäß wie folgt vorgegangen:

Zunächst wird der ringförmig geschlossene Schaufelkranz 5 hergestellt. Dies kann in konventioneller Weise durchgeführt werden. Zum Beispiel wird der Schaufelkranz 5 aus mehreren Einzelschaufeln zusammengeschweißt und vergütet. Ebenso kann ein geschmiedeter Ring durch Fräsen, Erodieren od.dgl. zum Schaufelkranz 5 ausgebildet werden.

In einem nächsten Herstellungsschritt wird der geschlossene Schaufelkranz 5 in mehrere Teile, hier in zwei Teile 11 und 12 (vgl. Fig. 2) getrennt. Diese Trennung in die zwei Teile bzw. Hälften 11,12 kann beispielsweise mittels Drahterosion oder mittels eines Lasertrennverfahrens oder mit einem sonstigen geeigneten Trennverfahren durchgeführt werden. Hierbei entstehen Trennstellen 13 und 14, die durch strichpunktierte Linien symbolisch dargestellt sind. Es ist klar, daß der Schaufelkranz 5 auch in mehr als zwei Teile 11,12 aufgetrennt werden kann.

Anschließend kann an den Trennstellen 13 und 14 die Herstellung von Schweißnähten vorbereitet werden, z.B. durch Säubern und Entgraten der Trennstellen 13,14.

In einem nachfolgenden Schritt werden die Teile 11,12 um den Rotor 1 herum zusammengesetzt, wobei der zusammengesetzte Schaufelkranz 5 den Rotor 1 umschließt. Das Zusammensetzen erfolgt hier in einem Axialabschnitt 15 des Rotors 1, dessen Außendurchmesser 16 kleiner als der Innendurchmesser 9 des Schaufelkranzes 5. Des weiteren wird hier zum Zusammensetzen der Teile 11 und 12 ein Montagehilfsring 17 verwendet, in den die einzelnen Teile 11 und 12 eingesetzt werden. Dieser Montagehilfsring 17 besitzt einen Innendurchmesser 25, der gleich groß ist wie ein Außendurchmesser 26 des Schaufelkranzes 5. Auf diese Weise ergibt sich für die eingesetzten Teile 11,12 eine optimale Positionierung relativ zueinander. Der Montagehilfsring 17 besteht hier ebenfalls aus zwei Teilen 18 und 19, die mit Hilfe von nicht gezeigten, lösbaren Befestigungsmitteln aneinander befestigbar sind, um den vollständig geschlossenen Montagehilfsring 17 auszubilden.

Die Hälften bzw. Teile 11 und 12 des Schaufelkranzes 5 werden vom Montagehilfsring 17 positioniert und können an den Innenseiten ihrer Trennstellen 13 und 14 miteinander verschweißt werden. Hierbei werden die inneren Schweißnähte 20 und 21 ausgebildet. Durch die inneren Schweißnähte 20,21 werden somit die Hälften 11 und 12 im Bereich des Fußes 6 miteinander verschweißt. Die inneren Schweißnähte 20,21 können dann verputzt und geprüft werden.

Anschließend wird bei einer bevorzugten Variante der Montagehilfsring 17 entfernt. Dann können die Hälften 11,12 auch an den Außenseiten ihrer Trennstellen 13 und 14 miteinander verschweißt werden, wobei die äußeren Schweißnähte 22 und 23 ausgebildet werden. Durch die äußeren Schweißnähte 22 und 23 werden die Teile 11 und 12 somit im Bereich des Deckbandes 7 miteiander verschweißt. Anschließend können auch die äußeren Schweißnähte 22 und 23 verputzt und geprüft werden. Der zuvor getrennte Schaufelkranz 5 ist nun wieder zu einem kompletten, ringförmig geschlossenen Schaufelkranz 5 zusammengefügt.

In einem nächsten Schritt wird der Montagehilfsring 17 erneut um den wiederhergestellten Schaufelkranz 5 herumgelegt, um so den Schaufelkranz 5 auf den dafür am Rotor 1 vorgesehenen Sitz 10 in axialer Richtung aufzuschieben. Der Montagehilfsring 17 ermöglicht dabei die optimale Positionierung des Schaufelkranzes 5 und gibt diesem für die nachfolgenden Schweißvorgänge die erforderliche Formstabilität. Mittels einer Fixiernaht kann die eingestellte, optimale Position des Schaufelkranzes 5 relativ zum Rotor 1 festgelegt werden. Anschließend kann eine Hauptschweißnaht 24 ausgebildet werden, mit welcher der Schaufelkranz 5 am Rotor 1 angeschweißt wird. Nachfolgend kann die Schweißverbindung wärmebehandelt werden, beispielsweise durch Spannungsarmglühen.

Schließlich kann die äußere Kontur des nunmehr ausgebildeten Regelrades 5, insbesondere durch eine Drehbearbeitung, fertiggestellt werden. Durch eine Endkontrolle der Schweißnähte 20 bis 24 kann deren Qualität sichergestellt werden.

Mit dem erfindungsgemäßen Verfahren kann somit ein Rotor 1 hergestellt werden, der mit einem geschlossenen Regelrad 4 ausgestattet ist. Hierbei kommt es auf die Außendurchmesser in den Bereichen 2 und 3 vor und nach dem Regelrad 4 nicht an, so daß insbesondere eine Neu-Herstellung bei einem Monoblockrotor sowie eine Wieder-Herstellung, z.B. im Service-Fall, bei einem herkömmlichen Rotor möglich sind.

## Patentansprüche

1. Verfahren zum Herstellen eines mit einem Regelrad (4) ausgestatteten Rotors (1) einer Turbine, insbesondere einer Dampfturbine,
mit folgenden Schritten:
A: Herstellen eines ringförmig geschlossenen Schaufelkranzes (5),
B: Trennen des Schaufelkranzes (5) in mehrere Teile (11,12),
C: Zusammensetzen der Teile (11,12) um den Rotor (1), derart, daß der zusammengesetzte Schaufelkranz (5) den Rotor (1) umschließt,
D: Anschweißen des zusammengesetzten Schaufelkranzes (5) am Rotor (1) an einem für das Regelrad (4) bestimmten Axialabschnitt (10).

2. Verfahren nach Anspruch 1,
**dadurch gekennzeichnet,**
**daß** Schritt C in einem Axialabschnitt (15) des Rotors (1) durchgeführt wird, dessen Außendurchmesser (16) kleiner ist als der Innendurchmesser (9) des Schaufelkranzes (5).

3. Verfahren nach Anspruch 1 oder 2,
**dadurch gekennzeichnet,**
**daß** die zusammengesetzten Teile (11,12) an ihren Trennstellen (13,14) miteinander verschweißt werden und daß danach der zusammengeschweißte Schaufelkranz (5) gemäß Schritt D am Rotor (1) angeschweißt wird.

4. Verfahren nach einem der Ansprüche 1 bis 3,
**dadurch gekennzeichnet,**
**daß** die Teile (11,12) für das Zusammensetzen gemäß Schritt C in einen Montagshilfsring (17) eingesetzt werden, dessen Innenquerschnitt (25) dem Außenquerschnitt (26) des Schaufelkranzes (5) entspricht.

5. Verfahren nach Anspruch 4,
**dadurch gekennzeichnet,**
**daß** das Einsetzen und Zusammensetzen der Teile (11,12) im Montagehilfsring (17) in einem Axialabschnitt (15) des Rotors (1) erfolgt, dessen Außendurchmesser (16) kleiner ist als der Innendurchmesser (9) des Schaufelkranzes (5), und daß die zusammengesetzten Teile (11,12) vor Schritt D an den Innenseiten ihrer Trennstellen (13,14) miteinander verschweißt werden.

6. Verfahren nach Anspruch 5,
**dadurch gekennzeichnet,**
**daß** nach dem Verschweißen der Teile (11,12) an den Innenseiten der Trennstellen (13,14) und vor Schritt D der Montagehilfsring (17) entfernt wird und die Teile (11,12) an den Außenseiten ihrer Trennstellen (13,14) miteinander verschweißt werden.

7. Verfahren nach einem der Ansprüche 1 bis 6,
**dadurch gekennzeichnet,**
**daß** der zusammengesetzte Schaufelkranz (5) für das Anschweißen am Rotor (1) gemäß Schritt D mit einem den Schaufelkranz (5) koaxial umfassenden Montagehilfsring (17) positioniert wird, dessen Innendurchmesser (25) dem Außendurchmesser (26) des Schaufelkranzes (5) entspricht.
